# EUROPÄISCHE PATENTSCHRIFT

(11) **EP 0 758 603 B1**
(45) Veröffentlichungstag und Bekanntmachung des Hinweises auf die Patenterteilung: **14.02.2001**
(21) Anmeldenummer: 96112938.4
(22) Anmeldetag: 12.08.1996
(51) Int. Cl.: B61D 17/18, B62D 29/00, B60R 13/02

(54) **Fahrzeug mit einer Wandisolierung**
Vehicle with a wall insulation
Véhicule avec une isolation de paroi

(30) Priorität: 16.08.1995 DE 19530088
(43) Veröffentlichungstag der Anmeldung: 19.02.1997
(73) Patentinhaber: DaimlerChrysler AG, 70546 Stuttgart (DE)
(72) Erfinder: Cramer, Ulrich, 10555 Berlin (DE); Buchwald, Peter, 16562 Bergfelde (DE)
(74) Vertreter: Luderschmidt, Schüler & Partner GbR

(56) Entgegenhaltungen:
- WO-A-95/00362
- DE-U- 8 709 065

## Beschreibung

Die Erfindung betrifft ein Fahrzeug, insbesondere Schienenfahrzeug, mit einer aus Schaumstofformstücken bestehenden Wandisolierung, die mit einer Aussenwand des Fahrzeugs kraft- und/oder formschlüssig verbunden ist, gemäss dem Oberbegriff des Anspruchs 1.

Zur Geräuschdämmung, insbesondere aber zur Wärmedämmung ist es bekannt, die Aussenwände wie auch bedarfsweise Innenwände von Fahrzeugen, zum Beispiel bei Schienenfahrzeugen, mit einer Isolierung zu versehen, die zwischen einer Aussenwand und einer Innenwand gebildeten Hohlräumen angeordnet und dort gegen Verlagerung infolge der Fahrzeugbewegung fixiert wird.

Bei bekannten Wandisolierungen von Fahrzeugwänden wird zunächst auf einer Innenseite einer Wand eine Tragstruktur angebracht, zum Beispiel in Form einer Klebeschicht, an welcher dann die allgemein üblichen Isoliermatten aus Fasermaterial, zum Beispiel Steinwolle anschliessen. Vor Anbringung der Gegenwand, zum Beispiel die Innenverkleidung, wird die so gebildete Isolierung mit einer elastischen Abdeckung, zum Beispiel Folie, versehen. Zur Regulierung der im Fahrzeug herrschenden Luftfeuchtigkeit dient hierbei eine Spritzkorkbeschichtung, die auf der zur Isolierung weisenden Innenseite der Innenwand angebracht ist.

Weiter ist aus der WO 95/00362 eine Fahrzeugisolierung aus Formstücken bekannt, die mittels Klammern oder Klettbändern usw. an der Aussenwand des Fahrzeugs befestigt ist. Die Formstücke bestehen aus einem üblichen Isoliermaterial, wie zum Beispiel Glasfaser, Schaumstoff mit offenen oder geschlossenen Zellen aus Polyurethan, Polyimid, Polyamid usw. Auf der Innenseite der Formstücke ist eine Folie aus einer atmungsaktiven/wasserbeständigen expandierten PTFE-Membran angebracht.

Die Handhabung und Herstellung der bekannten Isolierungen ist vergleichsweise umständlich und erfordert aufgrund der einzelnen Fertigungsschritte einen Zeitaufwand, der sich nachteilig auf die Gesamtdauer der Fertigung eines derartigen Fahrzeugs auswirkt.

Ausgehend von diesem Stand der Technik ist es daher Aufgabe der Erfindung, ein Fahrzeug der eingangs genannten Art zu schaffen, bei dem der Einbau der Isolierung sowie deren Befestigung vereinfacht ist und die problemlos an unterschiedliche Geometrien anpassbar ist.

Diese Aufgabe wird durch die Merkmale des kennzeichnenden Teils des Anspruchs 1 gelöst. Dementsprechend ist vorgesehen, dass die Schaumstofformstücke schwalbenschwanzförmig in ihre Oberfläche eingeformte Ausnehmungen aufweisen, und dass die zur Halterung der Schaumstofformstücke vorgesehenen Haltemittel von an der Aussenwand angeordneten örtlichen Anformungen gebildet sind, welche hakenförmig, winkelförmig oder als Stege beziehungsweise als ,zum Beispiel T-förmige, Schienen ausgebildet sein können.

Die erfindungsgemäss vorgesehenen Schaumstofformstücke können zum Beispiel als sogenannte Meterware als Serienprodukt dem Fahrzeughersteller zugeliefert werden und vor Ort an dem jeweiligen Einbauort zugeschnitten und angepasst werden. Dabei können die örtlichen Ausnehmungen schwalbenschwanzförmig in die Oberfläche der Schaumstofformstücke eingeformt sein, bzw. eine andere, an die jeweilige Kontur der vorgesehenen Haltemittel angepasste Querschnittsform aufweisen. Die bislang unumgänglichen Vorbereitungsarbeiten an den fahrzeugseitigen Wänden für die Befestigung der Isolierung daran können insoweit entfallen, als z.B. weder eine Klebeschicht anzubringen ist, noch Aushärtzeiten für das Trocknen der Klebeschicht abgewartet werden müssen.

Ferner sind keine zusätzlichen Befestigungsmittel erforderlich, die ansonsten bevorratet und beim Einbau zuvor montiert werden müssten. Ein weiterer Vorteil der erfindungsgemäß vorgesehenen Isolierung ist darin zu sehen, dass bei ihrem Einbau keine gesundheitsschädlichen Stäube oder Gase oder Dämpfe, zum Beispiel Lösemitteldämpfe aus Klebeschichten, auftreten. Ebenso ist die bisher erforderliche Aufbringung einer atmungsaktiven Korkschicht entbehrlich.

Darüberhinaus wird mit der erfindungsgemäss vorgesehenen Isolierung einschliesslich der nachstehend aufgeführten Ausgestaltungen und Verbesserungen eine besonders wirkungsvolle Isolierung erreicht, indem Kältebrücken, Stege oder an der Aussenwand angeordnete Schienen, z.B. T-Schienen, von der Isolierung voll umhüllt sind. Auch spielen Massabweichungen infolge von Toleranzen keine Rolle, da die einzelnen Isolierformstücke auf Stoss aneinander anliegen und materialbedingt elastisch nachgiebig sich den jeweiligen geometrischen Verhältnissen ohne Beeinträchtigung der Isolierwirkung anpassen.

Eine vorteilhafte Ausgestaltung der Erfindung ist dadurch gekennzeichnet, dass die zur Halterung der Schaumstofformstücke dienenden Anformungen als T-förmige Profilteile ausgebildet sind, die jeweils mit ihrem Steg an der Aussenwand angeschlossen sind. Dabei können die Profilteile einzelne Abschnitte kurzer Länge sein oder als durchlaufende Profile ausgebildet sein, welche über ihre gesamte Länge kraft- und/oder formschlüssig in die hierfür vorgesehenen Einformungen im jeweiligen Schaumstofformstücke eingreifen.

Eine weitere vorteilhafte Ausgestaltung der Erfindung ist dadurch gekennzeichnet, dass als Material für die Herstellung der als Isolierung dienenden Schaumstofformstücke ein offenporiger Schaumstoff vorgesehen ist. Dieser Schaumstoff kann bevorzugterweise feinporig ausgebildet sein.

Dabei erweist es sich als besonders vorteilhaft, dass das Material für die als Isolierung dienenden Schaumstofformstücke atmungsaktiv ist und vorhandene Raumfeuchtigkeit aufnimmt und zeitverzögert wieder abgibt.

Vorteilhaft ist ferner auch, dass die zur Dämmung vorgesehenen Schaumstofformkörper jederzeit rückstandsfrei wieder ausgebaut werden können und dies binnen kürzester Zeit.

Eine weitere Ausgestaltung der Erfindung sieht vor, dass die als Isolierung dienenden Schaumstofformstücke zur Gewährleistung der Brandschutzvorschriften flammwidrig ausgebildet sind.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen der Erfindung sowie besondere Vorteile der Erfindung näher erläutert und beschrieben werden.

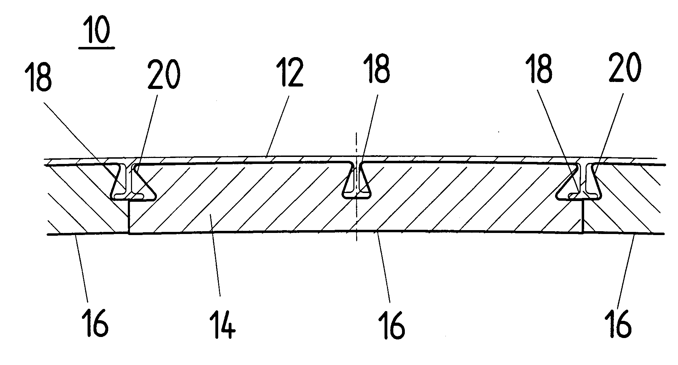

In der einzigen Figur ist ein Teillängsschnitt durch eine Fahrzeugwand mit einer erfindungsgemäßen Wandisolierung dargestellt.

In der einzigen Figur ist im Längsschnitt ein Abschnitt eines Fahrzeuges 10 mit einer Wand 12 gezeigt, an welcher Wand 12 eine Wandisolierung 14 mit in Erstreckungsrichtung der Wand 12 aneinander anliegenden Formstücken 16 angeordnet sind. Die Wand 12 ist mit einstückig angeformten Vorsprüngen 18 mit T-förmigem Querschnitt versehen, die von schwalbenschwanzförmigen Einformungen 20 in den Formstücken 16 umgriffen sind. Diese Einformungen 20 sind abhängig von dem für die Formstücke 16 verwendeten Material darin eingepreßt oder im entsprechenden Querschnitt herausgearbeitet, zum Beispiel herausgeschnitten oder gefräst.

Die Formstücke 16 bestehen aus einem feinzelligen offenporigen Schaumstoff, der für sich vorzugsweise bereits flammwidriges Verhalten aufweist.

Aufgrund der form- und/oder kraftschlüssigen Befestigung der Isolierkörper 16 an der Wand 12 ist eine schnelle Montage ermöglicht, die ohne Zusatzmittel und Werkzeuge erfolgen kann.

## Patentansprüche

1. Fahrzeug, insbesondere Schienenfahrzeug, mit einer aus Schaumstofformstücken bestehenden Wandisolierung, die mit einer Aussenwand des Fahrzeugs kraft-und/oder formschlüssig verbunden ist, dadurch gekennzeichnet, dass die Schaumstofformstücke schwalbenschwanzförmig in ihre Oberfläche eingeformte Ausnehmungen aufweisen, und dass die zur Halterung der Schaumstofformstücke vorgesehenen Haltemittel von an der Aussenwand angeordneten örtlichen Anformungen gebildet sind.

2. Fahrzeug nach Anspruch 1, dadurch gekennzeichnet, dass die zur Halterung der Schaumstofformstücke dienenden Anformungen als T-förmige Profilteile ausgebildet sind, die jeweils mit ihrem Steg an der Aussenwand angeschlossen sind.

3. Fahrzeug nach Anspruch 1 oder 2, dadurch gekennzeichnet, dass die zur Halterung vorgesehenen T-förmigen Profilteile als durchlaufende Profile ausgebildet sind, welche über ihre gesamte Länge kraft-und/oder formschlüssig in die hierfür vorgesehenen Einformungen im jeweiligen Schaumstofformkörper eingreifen.

4. Fahrzeug nach einem der vorherigen Ansprüche, dadurch gekennzeichnet, dass als Material für die Herstellung der als Isolierung dienenden Schaumstofformstücke ein offenporiger Schaumstoff vorgesehen ist.

5. Fahrzeug nach einem der vorherigen Ansprüche, dadurch gekennzeichnet, dass das Material für die als Isolierung dienenden Schaumstofformstücke feinporig ausgebildet ist.

6. Fahrzeug nach einem der vorherigen Ansprüche, dadurch gekennzeichnet, dass das Material für die als Isolierung dienenden Schaumstofformstücke atmungsaktiv ist und vorhandene Raumfeuchtigkeit aufnimmt und zeitverzögert wieder abgibt.

## Claims

1. A vehicle, in particular a rail vehicle, having a wall insulation made of mouldings of foamed material, the connection thereof with the outwall of the vehicle being effected non-positively and/or by a form-fit joint,
characterized in that said mouldings of foamed material possess dovetailed recesses moulded into the surface thereof and in that the fastening means provided to secure said mouldings of foamed material are formed by local appendages displaced at the outwall.

2. A vehicle according to claim 1, characterized in that said appendages serving to secure said mouldings of foamed material are developped such as to form T-shaped profile elements, each being joint at the outwall by means of the vertical leg thereof.

3. A vehicle according to claims 1 or 2, characterized in that said T-shaped profile elements provided for securing are developped such as to constitute continuous profiles, each being engaged along the total length non-positively and/or by a form-fit joint with the respective recess provided for this purpose in the mouldings of foamed material.

4. A vehicle according to one of the preceding claims, characterized in that an open-porous foamed material is provided as the material for the production of the mouldings of foamed material serving as an insulation.

5. A vehicle according to one of the preceding claims, characterized in that the material for the mouldings of foamed material serving as an insulation is made such as to be fine pored.

6. A vehicle according to one of the preceding claims, characterized in that the stuff for the mouldings of foamed material serving as an insulation is permeable to the air and adsorbs occuring room humidity and releases it with delay.

## Revendications

1. Véhicule, en particulier un véhicule sur rails, ayant une isolation de paroi se composant de pièces façonnées en produits alvéolaires qui sont joints à un paroi extérieure du véhicule par l'influence d'adhérence et/ou à engagement positif,
caractérisé en ce que lesdites pièces façonnées en produits alvéolaires présentent des creux à queue-d'aronde encastrés dans les surfaces de ceux-ci, et en ce que les moyens de fixage prévus pour l'attache des pièces façonnées en produits alvéolaires sont formés d'appendices locaux placés sur ledit paroi extérieure.

2. Véhicule d'après la revendication 1, caractéricé en ce que lesdits appendices destinés à l'attache des pièces façonnées en produits alvéolaires sont développés en tant qu'éléments profilés en forme de T, chacun d'eux étant joint au paroi extérieure avec son âme.

3. Véhicule d'après la revendication 1 ou 2, caractéricé en ce que lesdits éléments profilés en forme de T destinés à l'attache sont développés en tant que profils continus engrenant de toutes ses longueurs par l'influence d'adhérence et/ou à engagement positif dans les encastrements destinés pour cela à chacune des pièces façonnées en produits alvéolaires.

4. Véhicule d'après une des revendications précédentes, caractérisé en ce que l'on a prévu un produit alvéolaire à pores ouverts en tant que matière pour la production des pièces façonnées en produits alvéolaires destinées à l'isolation.

5. Véhicule d'après une des revendications précédentes, caractérisé en ce que la matière pour les pièces façonnées en produits alvéolaires destinées à l'isolation est formée aux pores minces.

6. Véhicule d'après une des revendications précédentes, caractérisé en ce que la matière pour les pièces façonnées en produits alvéolaires destinées à l'isolation est perméable à l'air et absorbe l'humidité locale présente et laisse l'échapper avec retard.
